# EUROPEAN PATENT APPLICATION

(11) **EP 1 930 585 A2**
(43) Date of publication of application: **11.06.2008**
(21) Application number: 07121036.3
(22) Date of filing: 19.11.2007
(51) Int. Cl.: F03D 3/00, F03D 3/04, F03D 9/00

(54) **Wind apparatus**

(30) Priority: 20.11.2006 IT BO20060786
(71) Applicant: Know How Italia S.p.A., 60020 Camerata Picena (IT)
(72) Inventor: Bernardi, Wladimiro, 40057 Cadriano (IT)
(74) Representative: Jorio, Paolo

(57) **Abstract**

A wind apparatus (10) which specifically comprises an essentially semi-cylindrical-shaped wind screen hood (23, 23*) adapted to rotate about a vertical axis (A). The wind screen hood (23, 23*) is external to a wind impeller (13; 13*) and is put into rotation (to reach a position of balance) by rudders (25, 26; 25*, 26*) actuated by the wind so as to cover a portion of a plurality of radial thrust elements (18; 18*) according to the direction (W) of the wind itself.

## Description

The present invention relates to a wind generator.

Specifically, the present invention finds advantageous, but not exclusive, application in the field of lighting streets, highways, etc., to which explicit reference will be made in the following description without hence loosing in generality.

It is known that supplying electricity to streetlamps, road signs, emergency telephones, etc. is very expensive because it requires an extensive distribution network constituted by buried electric cables, the installation of which is expensive both in terms of employed materials and due to the specialized manpower which is required.

In order to avoid the drawbacks due to the use of a centralized electric network for supplying electricity to streetlamps, during the past years streetlamps actuated, for example, by wind energy have been developed.

Furthermore, in order to attempt to limit at most the visual impact that the use of wind blades implies on the territory, streetlamps using at least one vertical axis impeller have been designed, the transverse volume dimensions of which are contained within the volume of the diameter of the post itself.

Not only; since obviously in normal conditions of operation, the impeller coupled to the generator produces electric energy all day long, during the daytime hours (i.e. when the streetlamp combined to the wind apparatus is not switched on) the produced energy may either be easily sent to the network and sold to an electrical energy marketing company, or used for other purposes. It is apparent that all the surplus energy which is not used for lighting by means of the streetlamp onto which the above-mentioned wind apparatus is mounted is sellable.

Moreover, these streetlamps running on wind energy may present powers which easily reach 1 kW.

Furthermore, because, as previously mentioned, the dimensions of the impeller blades are contained in the volume dimensions of a normal supporting post, the environmental impact of visual nature is very low, indeed, the presence of rotating elements may in this case be visually pleasant.

For example, some of these solutions have been described in GB 2 246 173 (TEMPLE) and in GB 2 344 382 (SANSONE ET AL.)

However, despite working in a fairly satisfactory manner, the apparatuses described in the aforesaid documents do not fully exploit the power of the wind which strikes the impeller because, as explained in greater detail below, a portion of the wind energy is lost, thus considerably decreasing the efficiency of the impeller itself and, consequently, also of the electric generator connected thereto.

It is therefore the main object of the present invention to make a wind apparatus which is free from the above-described drawbacks and which is, at the same time, easy and cost-effective to implement.

According to the present invention, a wind apparatus as claimed in the appended claims is thus implemented.

The present invention will now be described with reference to the accompanying drawings which illustrate two non-limitative embodiments thereof, wherein:
- figure 1 shows a global view of a first embodiment of a wind apparatus according to the present invention;
- figure 2 shows an enlarged detail of the wind apparatus figure 1;
- figure 3 shows a longitudinal section X-X of the first embodiment in figure 1; and
- figure 4 is a three-dimensional illustration of some details belonging to a second embodiment of a wind apparatus object of the present invention.

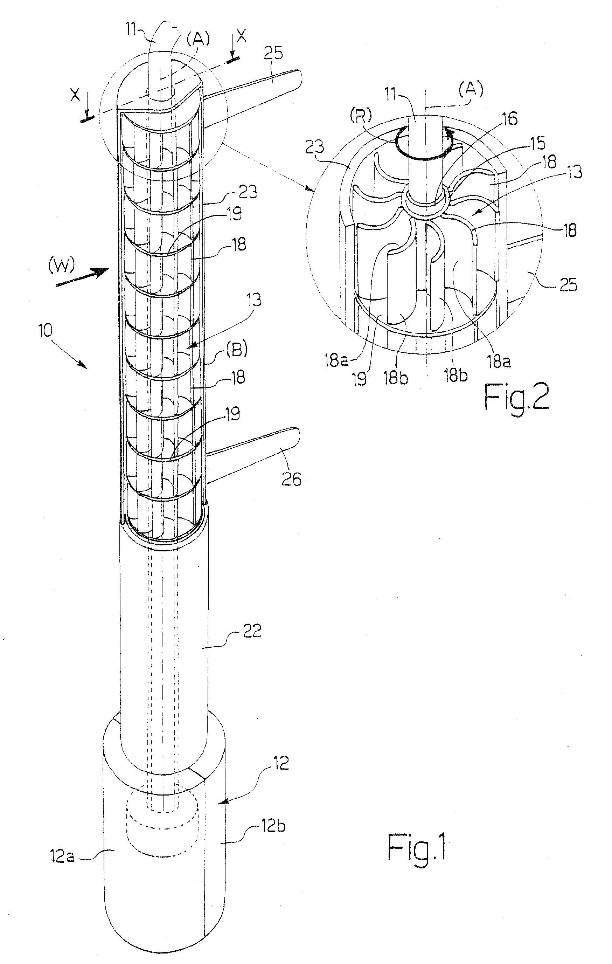

In figure 1, numeral 10 generically indicates, as a whole, a wind generating apparatus according to the present invention.

As shown in figures 1-3, in a first embodiment thereof, the apparatus 10 comprises a rod 11 (with longitudinal and vertical symmetry axis (A)) fixed to a base 12. On the rod 11, on the side opposite to the base 12, there is provided a lamp (not shown in the accompanying figures) directly powered by the electric energy produced by a wind impeller 13 in concert with a wind generator 14 (see below).

The wind impeller 13, in turn, comprises a hub 15 coaxial with the axis (A) of the rod 11. Furthermore, the rod 11 is inside the hub 15 and a pair of bearings 16, 17 onto which the weight of the entire impeller 13 is relieved, are keyed thereon. The bearings 16, 17 allow the relative rotation of the impeller 13 itself with respect to the rod 11.

A plurality of essentially tile-shaped blades 18 is integral with the hub 15. Each tile presents a corresponding concave surface 18a and a corresponding convex surface 18b.

In embodiment shown in figures 1-3, the wind impeller 13 is completed by a plurality of horizontal reinforcement plates 19, possibly integrally obtained with the hub 15. Such horizontal plates 19 divide the blades 18 into vertical sections.

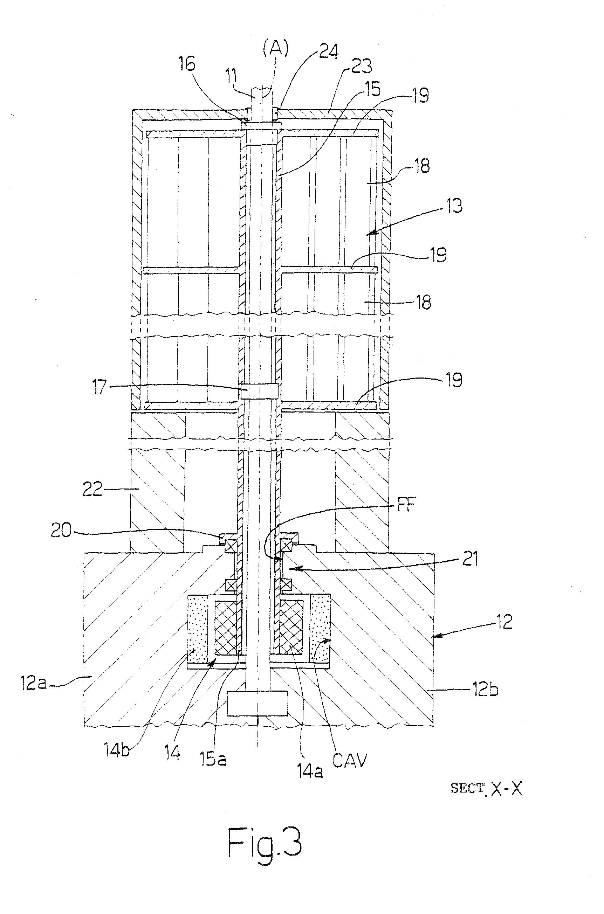

Furthermore, the lower portion of the hub 15 is provided with a flange 20 (essentially perpendicular to axis (A)), which, in use, rests on a thrust bearing assembly 21 by means of which the weight of the entire impeller 13 is relieved onto the base 12 (figure 3).

In a known manner, the generator 14 is electrically connected to a battery (not shown) and/or to an electric line (not shown).

A rotor 14a of the wind generator 14 is made integral with the lower end 15a of the hub 15, in a known manner, while a stator 14b of the same wind generator 14 is accommodated in a cavity CAV provided in the base 12.

In order to facilitate the assembly/disassembly of the wind generator 14 in/from the cavity CAV, the base 12 may be made in two portions 12a, 12b, reciprocally coupled in use by means of known systems and thus not shown.

As shown in figure 3, the rod 11, the lower portion of the hub 15 and the thrust bearing assembly 21 are inserted through a through hole FF made in the base 12 so as to allow the lower end 15a of the hub 15 to extend into the cavity CAV.

Obviously, if the base 12 consists of two portions 12a, 12b, also the through hole FF may be made in two halves.

Furthermore, since the lower portion of the hub 15 and the flange 20 are nearly always rotating about the axis (A) (it is presumed that such apparatuses are installed in places which are mostly windy), in order to avoid dangers for bystanders, the lower part of the apparatus 10 is protected by a protective hedge 22 (figures 1, 3), which, for example, may consists of two semi-cylindrical half shells (not expressly indicated in the accompanying figures) reciprocally coupled in a known manner.

Now, we will assume that the wind blows according to a direction shown by an arrow (W) (figure 1).

In case the wind impeller 13 was in no way shielded, the wind (which blows according to (W)) would strike a first portion of the blades 18 (more in detail, the blades 18 which are approximately situated on the right-hand part of the apparatus 10 shown in figure 2) on their concave surfaces 18a causing a rotation of the impeller about the axis (A) according to an arrow (R) (figure 2); however, the wind would act also on the convex surfaces 18b of a second portion of blades 18 (more in detail, the blades 18 which are approximately situated on the left-hand side of the apparatus 10 shown in figure 2).

The action on the second portion of blades 18 would be counter-productive for the purpose of electric energy production because it would counter-react the action of the wind on the first portion of blades 18 and, thus, would "slow down" the rotation of the wind impeller 13 about the axis (A) according to the arrow (R) causing a considerable waste of energy as a consequence.

Therefore, it has been inventively thought to shield the aforesaid second portion of blades 18 with an essentially semi-cylindrical-shaped wind screen hood 23. Such wind screen hood 23 rests on the rod 11 by means of a thrust bearing 24 and, thus, is also adapted to rotate about the axis (A).

Furthermore, on a vertical edge (B) of the wind screen hood 23 there are provided two rudders 25, 26 (figure 1) which allow the orientation of the wind screen hood 23 itself according to the direction of the wind given by the arrow (W) so as to reach a position of balance. Indeed, since the action of the wind will also occur on them, such rudders 25, 26 (in stationary wind conditions) will align with the direction of the wind itself, direction given by the arrow (W), as explained. Therefore, the system will be configured as shown in figures 1, 2 in a condition of balance until the wind blows in the direction identified by the arrow (W). It is apparent that if the wind changes direction, the system will reposition itself in a new condition of balance.

For the optimal operation of the impeller 13, the left-hand portion of the blades 18 shown in figure 1, 2 must be covered by the wind screen hood 23 so that no significant wind action occurs directly on such blades 18.

Furthermore, since such second portion of blades 18 does not "hit" into the wind with its own convex surfaces 18b (because they are "covered" by the wind screen hood 23), there will be no significant negative effect which would tend to slow down the wind impeller 13 in its rotation about the axis (A) according to the arrow (R).

In this manner, there is no loss of a part of energy as occurs instead in traditional wind apparatuses.

As previously mentioned, if the direction of the wind changes, the wind screen hood 23 will be oriented as a consequence according to the new direction.

In other words, the wind screen hood 23, combined with the corresponding rudders 25, 26, forms a sort of "weather vane" or "wind sock" adapted to align in the same direction as the wind (direction indicated by the arrow (W)).

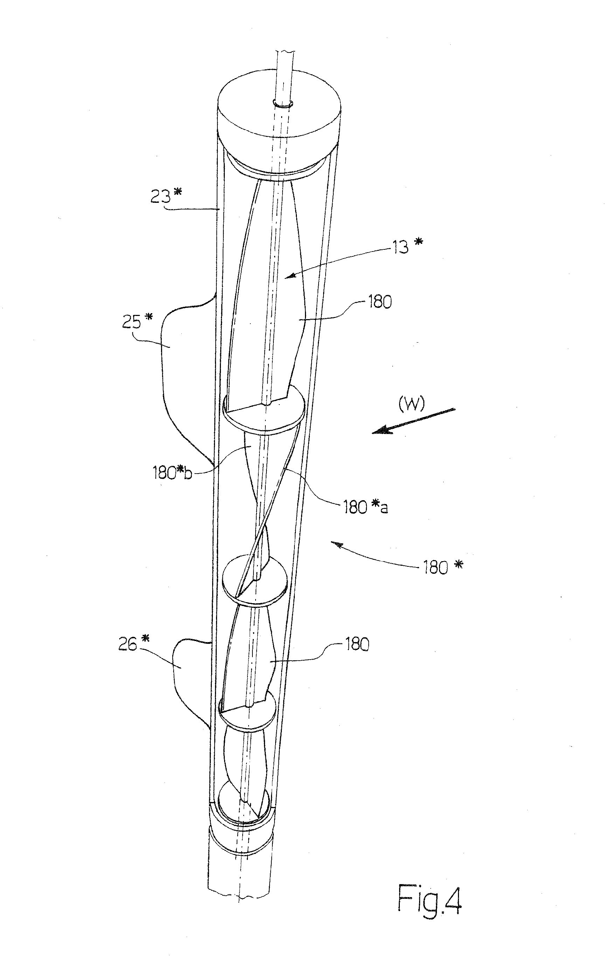

Figure 4 shows a second embodiment of the invention in which the traditional blades 18 of the impeller 13, which were previously illustrated with reference to figures 1-3, are replaced by a plurality of propeller segments 180 of an impeller 13*.

For example, the propeller segment 180* shown in figure 4 contemplates a first surface 180*a and a second surface 180*b.

For the previously explained reasons, the second surface 180*b must be shielded by the wind screen hood 23* with which two rudders 25* and 26* are integral. As the wind direction given by the arrow (W) changes, the position of the wind screen hood 23* will also change with the implications which have been described with reference to the first embodiment shown referring to figures 1-3.

Obviously, a generator (not shown) of the previously seen type is associated to the impeller 13*.

In a further embodiment (not shown), at least one portion of the wind screen hood is scroll-shaped to create an air inlet funnel, in which the air itself is compressed.

The main advantage of the apparatus according to the present invention is in that, by adopting a simple, essentially semi-cylindrical hood moved by the wind force itself by means of at least one rudder, either only the concave surface of the blades (first embodiment), or a particular surface of the propeller segments (second embodiment) are directly struck by the wind, while the surfaces which would "brake" the impeller when struck by the wind are shielded.

### Reference numbers:

10 - wind apparatus
11 - rod
12 - base
12a - portion (of the base 12)
12b - portion (of the base 12)
13 - wind impeller
13* - wind impeller
14 - wind generator
14a - rotor (of the wind generator 14)
14b - stator (of the wind generator 14)
15 - hub (of the wind impeller 13)
15a - lower end (of the hub 15)
16 - bearing
17 - bearing
18 - blade (of the wind impeller 13)
18a - concave surface (of the blade 18)
18b - convex surface (of the blade 18)
19 - plate
20 - flange
21 - thrust bearing assembly
22 - protective hedge
23 - wind screen hood
24 - thrust bearing
25 - rudder
25* - rudder
26 - rudder
26* - rudder
180 - propeller segment
180* - propeller segment
180*a - first surface (of a propeller segment)
180*b - second surface (of a propeller segment)
(A)- vertical axis (of rod 11, impeller 13 and wind screen hood 23)
(B) - edge
(CAV) - cavity
(FF) - through hole

## Claims

1. A wind apparatus (10) comprising:
- an elongated load-bearing structure (11) presenting an essentially vertical longitudinal axis (A);
- a wind impeller (13; 13*) with vertical axis (A) also, said wind impeller (13; 13*) comprising a central hub (15) and a plurality of radial thrust elements (18; 180); and
- an electrical generator device (14) actuated by said wind impeller (13; 13*);
apparatus (10) **characterized in that** it comprises, furthermore, an essentially semi-cylindrical-shaped wind screen hood (23, 23*) adapted to rotate about said vertical axis (A) and external to said wind impeller (13; 13*), said wind screen hood (23, 23*) being put into rotation by directional guiding means (25, 26; 25*, 26*) actuated by the wind so as to reach a position of balance and to cover a portion of said plurality of radial thrust elements (18; 18*) according to the direction (W) of the wind itself.

2. A wind apparatus (10), as claimed in claim 1, **characterized in that** each blade (18) is essentially tile-shaped, presenting a concave surface (18a) and a corresponding convex surface (18b).

3. A wind apparatus (10), as claimed in claim 1, **characterized in that** said impeller (13) contemplates a plurality of propeller segments (180).

4. A wind apparatus (10), as claimed in any preceding claim, **characterized in that** said directional guiding means (25, 26; 25*, 26*) comprise at least one rudder (25, 26; 25*, 26*) placed on a vertical edge (B) of the wind screen hood (23, 23*).

5. A wind apparatus (10), as claimed in any preceding claim, **characterized in that** at least one portion of the wind screen hood (23, 23*) is scroll-shaped to create an air inlet funnel, in which the air itself is compressed.
